(19) **Europäisches Patentamt**

**European Patent Office**

**Office européen des brevets**

(11) Veröffentlichungsnummer: **0 271 767 B1**

(12) **EUROPÄISCHE PATENTSCHRIFT**

(45) Veröffentlichungstag der Patentschrift: **04.12.91**

(51) Int. Cl.⁵: **C09C 1/00**

(21) Anmeldenummer: **87117792.9**

(22) Anmeldetag: **02.12.87**

Die Akte enthält technische Angaben, die nach dem Eingang der Anmeldung eingereicht wurden und die nicht in dieser Patentschrift enthalten sind.

(54) **Verfahren zur Herstellung von mit Rutil beschichteten Glimmerpigmenten.**

(30) Priorität: **13.12.86 DE 3642647**

(43) Veröffentlichungstag der Anmeldung:
**22.06.88 Patentblatt 88/25**

(45) Bekanntmachung des Hinweises auf die Patenterteilung:
**04.12.91 Patentblatt 91/49**

(84) Benannte Vertragsstaaten:
**BE CH DE ES FR GB IT LI NL**

(56) Entgegenhaltungen:
**US-A- 4 038 099**
**US-A- 4 086 100**

(73) Patentinhaber: **MERCK PATENT GESELL-SCHAFT MIT BESCHRÄNKTER HAFTUNG**
**Frankfurter Strasse 250 Postfach 4119**
**W-6100 Darmstadt(DE)**

(72) Erfinder: **Ambrosius, Klaus, Dr.**
**Waldschmidtstrasse 65**
**W-6000 Frankfurt am Main(DE)**
Erfinder: **Knapp, August**
**Pater-Delp-Strasse 14**
**W-6110 Dieburg(DE)**
Erfinder: **Plamper, Helmut**
**Ulmenweg 15**
**W-6110 Dieburg(DE)**
Erfinder: **Esselborn, Reiner, Dr.**
**Küchlerstrasse 6**
**W-6100 Darmstadt(DE)**

## Beschreibung

Die Erfindung betrifft ein Verfahren zur Herstellung von Perlglanzpigmenten auf der Basis von mit Metalloxiden beschichteten Glimmerschuppen, wobei zur Beschichtung mit Titandioxid in der Rutilform auf die Glimmerschuppen in wässeriger Suspension sowohl $TiO_2$ als auch $SnO_2$ aufgefällt wird und das Pigment danach gewaschen, getrocknet und geglüht wird.

Verfahren zur Herstellung von rutilhaltigen Glimmerpigmenten sind sowohl aus den deutschen Patentschriften 22 14 545 und 25 22 572 als auch der US-Patentschrift 40 39 099 bekannt.

Nach dem Verfahren der DE-PS 25 22 572 wird auf die Glimmerschuppen zunächst eine sehr dünne Titandioxidschicht aufgefällt und danach alternierend zumindest eine $SnO_2$- und $TiO_2$-Schicht, wobei zur Herstellung dickerer Schichten mehrere $SnO_2$- und $TiO_2$-Schichten alternierend aufgefällt werden. Die Fällung der $SnO_2$- und der $TiO_2$-Schichten erfolgt dabei jeweils so, daß die Zinnsalzlösung und ggf. ein Oxidationsmittel bzw. die Titansalzlösung gleichzeitig mit einer Base zur Konstanthaltung des pH-Wertes langsam der Glimmersuspension zugegeben wird. Die Fällung kann auf diese Weise sehr einfach solange fortgesetzt werden, bis die gewünschte Schichtdicke der Metalloxide und damit die gewünschte Interferenzfarbe des Pigments erreicht ist. Nach dem üblichen Waschen, Trocknen und Glühen erhält man sehr brilliante Pigmente. Von Nachteil ist jedoch das insbesondere bei dickeren Schichten sehr umständliche Verfahren. Darüber hinaus sind auch relativ hohe Zinndioxid-Gehalte notwendig, die in der Regel bei etwa 5 bis 7 Gew.% liegen, bezogen auf das fertige Pigment.

Das Verfahren nach der DE-PS 22 14 545 und der US-PS 40 38 099 kommt zwar mit geringeren Zinnmengen aus, hat aber andere gravierende Nachteile. Bei diesem Verfahren wird die Glimmersuspension mit der Lösung eines Zinnsalzes und danach mit einer starken Säure versetzt. Dabei wird häufig jedoch nur ein geringer Teil des Zinns als wasserhaltiges Zinnoxid auf die Glimmerschuppen aufgefällt, während ein großer Teil in Lösung verbleibt und entweder ins Abwasser gelangt oder beim Erhitzen nach Zugabe einer Titanylsulfatlösung als Zinnoxid mit in die Titandioxidschicht eingebaut wird. Außerdem wird bei Pigmenten, welche nach dem in US-PS 40 38 099 beschriebenen Verfahren hergestellt sind, manchmal eine nur unvollständige Rutilisierung der Titandioxidschicht gefunden.

Bei diesem Hydrolyseverfahren wird die Dicke der Metalloxidschicht und damit die Interferenzfarbe des Pigments von vornherein durch die Menge des zugegebenen Metallsalzes bestimmt, wobei es unter einem praktischen Gesichtspunkt sehr nachteilig ist, daß das Zinnoxid nicht quantitativ aufgefällt wird, so daß zunächst der bei den jeweiligen Abscheidebedingungen tatsächlich als Zinnoxid aufgebrachte Zinnanteil ermittelt werden muß. Eine Korrektur im Verlauf des Beschichtungsverfahrens und insbesondere eine exakte Endpunktbestimmung wie nach dem Verfahren der DE-PS 25 22 572 ist bei dem Hydrolyseverfahren nicht möglich.

Überraschenderweise zeigt sich jedoch, daß auch eine Kombination der Zinndioxidfällung nach der DE-PS 22 14 545 mit der Titandioxidfällung nach der DE-PS 25 22 572 nicht möglich ist. Offenbar stört das in Lösung verbleibende Zinnsalz die Titandioxidfällung so, daß nur qualitativ sehr schlechte Pigmente erhalten werden, deren Rutilgehalt nicht reproduzierbar bei 100 % liegt.

Es bestand daher die Aufgabe, ein Verfahren zu finden, mit dem in zuverlässiger Weise eine Titandioxidbeschichtung in der Rutilmodifikation auf Glimmerplättchen abgeschieden werden kann, das in der Produktion möglichst einfach durchzuführen ist, bei dem die Titandioxidbeschichtung durch gleichzeitiges Zudosieren von Titansalz und Base vorgenommen werden kann und bei dem der Zinngehalt auf Werte unter 1 Gew.% beschränkt werden kann.

Es wurde nun gefunden, daß dieses Ziel erreicht werden kann, wenn man zunächst eine homogene Beschichtung des Glimmers mit Zinndioxid so vornimmt, daß möglichst kein Zinnsalz in Lösung verbleibt, und danach erst die Titandioxidschicht auffällt.

Gegenstand der Erfindung ist daher ein Verfahren zur Herstellung von Perlglanzpigmenten auf der Basis von mit Metalloxiden beschichteten Glimmerschuppenn, wobei zur Beschichtung mit Titandioxid in der Rutilform auf die Glimmerschuppen in wässeriger Suspension sowohl Titandioxid als auch Zinndioxid aus wässerigen Metallsalzlösungen aufgefällt wird und das Pigment danach gewaschen, getrocknet und geglüht wird, das dadurch gekennzeichnet ist, daß das Zinndioxid bei einem pH-Wert zwischen 0,5 und 3, der durch Zusatz einer Base weitgehend konstant gehalten wird, aufgefällt wird, so daß möglichst kein Zinnsalz in Lösung verbleibt, ehe die Titansalzlösung zugegeben wird.

Überraschenderweise wird bei diesem Verfahren in sehr zuverlässiger Weise selbst bei dicken Titandioxidschichten eine 100%ige Rutilisierung erreicht, obwohl nur geringe Zinnmengen eingesetzt werden müssen. So ist bereits eine Menge von etwa 0,25 Gew.% ausreichend. Lediglich zur Sicherheit wird man in der Regel einen etwas höheren Zinngehalt von etwa 1 % wählen. Diese Werte sind jedoch auf das Gewicht des eingesetzten Glimmers bezogen, so daß die Werte bezogen auf das Endprodukt je nach der aufgefällten Titandioxidmenge noch deutlich darunter liegen. Überraschend ist auch, daß die Menge des zur Rutilisierung notwendigen Zinndioxids weitgehend unabhängig ist von der Teilchengröße des eingesetzten Glimmers.

Zur Fällung des Zinndioxids wird die Glimmersuspension auf einen geeigneten pH-Wert eingestellt. Im allgemeinen sind dazu pH-Werte zwischen etwa 0,5 und 3 geeignet, insbesondere der Bereich von etwa 1,0 bis 2,5. Im Rahmen der vorliegenden Erfindung hat sich als besonders vorteilhaft der Bereich von etwa 1,5 bis 2,0 herausgestellt. Danach wird die Zinnsalzlösung gleichzeitig mit einer Base zudosiert.

Als Zinnsalz kann im Prinzip jedes verfügbare zwei- oder vierwertige Zinnsalz verwendet werden. Wegen der guten Verfügbarkeit und des günstigen Preises wird vorzugsweise $SnCl_4$ verwendet, wobei mit dem Pentahydrat besonders gute Beschichtungen gelingen. Auch die Base, mit der der pH-Wert der Suspension während der Beschichtung weitgehend konstant gehalten wird, ist an sich frei wählbar, so daß z.B. Alkalilaugen, insbesondere verdünnte Natronlauge, Ammoniumhydroxid bzw. gasförmiges $NH_3$ oder ggf. auch geeignete Puffersysteme eingesetzt werden können.

Nach Beendigung der Zinndioxidfällung läßt man in der Regel noch einige Minuten nachrühren um sicherzustellen, daß alles Zinn ausgefällt ist, und beginnt dann mit der Titandioxidfällung. Diese erfolgt im Prinzip nach der in der DE-PS 20 09 566 beschriebenen Methode, wobei ein Titansalz, insbesondere $TiCl_4$, gemeinsam mit einer Base der Glimmersuspension bei erhöhter Temperatur zudosiert wird. Überraschenderweise wurde jedoch gefunden, daß eine zuverlässige Rutilbildung nur dann erreicht wird, wenn der pH-Wert bei der Fällung nicht wesentlich über 2,0 liegt. Bevorzugt sind daher pH-Werte, die im gleichen Bereich wie bei der Zinndioxidfällung liegen, nämlich bei etwa 1,5 bis 2,0.

Die Aufarbeitung der beschichteten Glimmerpigmente erfolgt dann in üblicher Weise so, daß das Pigment abgetrennt, gewaschen, getrocknet und danach geglüht wird. Als vorteilhaft bei dem neuen Verfahren hat sich dabei herausgestellt, daß bereits mit relativ milden Glühbedingungen eine 100 % Rutilisierung erreicht werden kann. So ist eine etwa 30minütige Kalzinierung bei etwa 850 °C oder einer äquivalenten Zeit/ Temperatur-Kombination bereits ausreichend. Im Vergleich zu den Verfahren des Standes der Technik, bei denen eine Zeit/ Temperatur-Kombination von 30 Minuten/950 °C üblich ist, ergibt dies eine weitere Vereinfachung und Verbilligung des Verfahrens.

Es wurde bereits erwähnt, daß nach dem erfindungsgemäßen Verfahren selbst dicke Titandioxidschichten zuverlässig in der Rutilform gewonnen werden können, ohne daß Zinndioxid in die Schicht oder als Zwischenschicht eingebaut wird. In den nachfolgenden Beispielen ist dies am Beispiel von Pigmenten mit grüner Interferenzfarbe gezeigt, daß diese eine besonders dicke Titandioxidschicht aufweisen. Da die Titandioxidfällung jedoch bei Erreichen jedes gewünschten Farbendpunkts bzw. jeder gewünschten Schichtdicke gestoppt werden kann, ist es nach dem beschriebenen Verfahren möglich, jedes gewünschte Pigment herzustellen.

### Beispiel 1

Eine Suspension von 100 g Glimmer der Teilchengröße 10 bis 50 μm in 2 l Wasser werden bei 75 °C innerhalb einer Stunde mit 60 ml einer wäßrigen Lösung von 3 g $SnCl_4 \cdot 5 H_2O$ und 10 ml konzentrierter Salzsäure versetzt, wobei durch gleichzeitge Zugabe von verdünnter Natronlauge ein pH-Wert von 1,8 eingehalten wird.

Dann wird mit einer Geschwindigkeit von etwa 2 ml/min eine wässerige etwa 20 Gew.%ige $TiCl_4$-Lösung zugegeben, wobei mit verdünnter Natronlauge ein pH-Wert von 1,6 eingehalten wird.

Nach Erreichen einer grünen Interferenzarbe wird noch etwa eine halbe Stunde nachgerührt, das Pigment abgetrennt, mit Wasser salzfrei gewaschen, getrocknet und 30 Minuten bei 850 °C geglüht. Die Röntgenstrukturanalyse zeigt, daß die Titandioxidschicht zu 100 % in der Rutilform vorliegt.

### Beispiele 2 bis 4

Es wird analog Beispiel 1 gearbeitet, wobei jedoch bei der Titandioxidfällung ein pH-Wert von 1,8; 2,0 bzw. 2,2 eingehalten wird. Die Röntgenstrukturanalyse zeigt, daß eine 100%ige Rutilisierung erreicht wird.

### Beispiele 5 bis 7

Es wird analog Beispiel 1 gearbeitet, wobei jedoch die Temperatur der Suspension bei 90 °C liegt und der pH-Wert bei der Titandioxidfällung auf 1,6; 1,8 bzw. 2,0 eingestellt wird. Die Röntgenstrukturanalyse zeigt, daß eine 100%ige Rutilisierung erreicht wird.

Die Pigmente der Beispiele 1-7 haben eine Zusammensetzung entsprechend 39,5 Gew.% Glimmer, 60,0 Gew.% $TiO_2$ und 0,5 Gew.% $SnO_2$.

### Beispiel 8

Man arbeitet analog Beispiel 1, wobei jedoch die Menge des Zinnsalzes auf 1,5 g $SnCl_4$ 5 $H_2O$ reduziert wird. Man erhält ein Pigment der Zusammensetzung 39,6 Gew.% Glimmer, 60,1 Gew.% $TiO_2$ und 0,25 Gew.% $SnO_2$. Die Röntgenstrukturanalyse zeigt, daß eine 100%ige Rutilisierung erreicht wird.

## Patentansprüche

1. Verfahren zur Herstellung von Perlglanzpigmenten auf der Basis von mit Metalloxiden beschichteten Glimmerschuppen, wobei zur Beschichtung mit Titandioxid in der Rutilform auf die Glimmerschuppen in wässeriger Suspension sowohl Titandioxid als auch Zinndioxid aus wässerigen Metallsalzlösungen aufgefällt wird und das Pigment danach gewaschen, getrocknet und geglüht wird, dadurch gekennzeichnet, daß das Zinndioxid bei einem pH-Wert zwischen 0,5 und 3, der durch Zugabe einer Base weitgehend konstant gehalten wird, aufgefällt wird, so daß möglichst kein Zinnsalz in Lösung verbleibt, ehe die Titansalzlösung zugegeben wird.

2. Verfahren nach Anspruch 1, dadurch gekennzeichnet, daß das Zinnsalz in einer solchen Menge eingesetzt wird, daß sich ein Zinngehalt, bezogen auf den eingesetzten Glimmer, von etwa 0,25 bis 1,0 Gew.% ergibt.

3. Verfahren nach einem der Ansprüche 1-2, dadurch gekennzeichnet, daß das Zinndioxid bei einem pH-Wert von etwa 1,5 bis 2,0 gefällt wird.

4. Verfahren nach einem der Ansprüche 1-3, dadurch gekennzeichnet, daß das Titandioxid bei einem pH-Wert von etwa 1,5 bis 2,0 gefällt wird.

5. Verfahren nach einem der Ansprüche 1-4, dadurch gekennzeichnet, daß die Fällung der Metalloxide bei einer Temperatur von etwa 50 bis 100 °C durchgeführt wird.

6. Verfahren nach einem der Ansprüche 1-5, dadurch gekennzeichnet, daß das Pigment zumindest für 30 Minuten bei 850 °C oder dazu äquivalenten Bedingungen geglüht wird.

7. Verfahren nach einem der Ansprüche 1-6, dadurch gekennzeichnet, daß als Metallsalze die Tetrachloride eingesetzt werden.

## Claims

1. Process for preparing pearl lustre pigments based on metal oxide coated mica flakes wherein, to coat with titanium dioxide in the rutile form not only titanium dioxide but also tin dioxide is precipitated from aqueous metal salt solutions onto the mica flakes in aqueous suspension and the pigment is then washed, dried and calcined, which is characterised in that the tin dioxide is precipitated at a pH between 0.5 and 3 kept substantially constant by addition of a base, so that ideally no tin salt remains in solution before the titanium salt solution is added.

2. Process according to Claim 1, characterised in that the tin salt is used in such an amount that a tin content, based on the mica used, of about 0.25 to 1.0% by weight results.

3. Process according to either of Claims 1-2, characterised in that the tin dioxide is precipitated at a pH of about 1.5 to 2.0.

4. Process according to any one of Claims 1-3, characterised in that the titanium dioxide is precipitated at a pH of about 1.5 to 2.0.

5. Process according to any one of Claims 1-4, characterised in that the precipitation of metal oxides is carried out at a temperature of about 50 to 100 °C.

6. Process according to any one of Claims 1-5, characterised in that the pigment is calcined at 850 °C for at least 30 minutes or under conditions equivalent thereto.

7. Process according to any one of Claims 1-6, characterised in that the metal salts used are the tetrachlorides.

## Revendications

1. Procédé pour la préparation de pigments nacrés à base d'écailles de mica revêtues d'oxydes métalliques dans lequel, pour le revêtement par du bioxyde de titane sous la forme rutile des écailles de mica en suspension aqueuse, on précipite à la fois du bioxyde de titane et du bioxyde d'étain à partir de solutions aqueuses de sels métalliques puis on lave, on sèche et on calcine le pigment, caractérisé en ce que l'on précipite le bioxyde d'étain à un pH de 0,5 à 3 maintenu pratiquement constant par addition d'une base en sorte qu'il ne subsiste pratiquement pas de sel d'étain dans la solution avant d'ajouter la solution du sel de titane.

2. Procédé selon la revendication 1, caractérisé en ce que l'on met le sel d'étain en oeuvre en quantité telle que la teneur en étain, par rapport au mica mis en oeuvre, soit d'environ 0,25 à 1,0 % en poids.

3. Procédé selon une des revendications 1 ou 2, caractérisé en ce que le bioxyde d'étain est précipité à un pH d'environ 1,5 à 2,0.

4. Procédé selon une des revendications 1 à 3, caractérisé en ce que le bioxyde de titane est précipité à un pH d'environ 1,5 à 2,0.

5. Procédé selon une des revendications 1 à 4, caractérisé en ce que les cxydes métalliques sont précipités à une température d'environ 50 à 100° C.

6. Procédé selon une des revendications 1 à 5, caractérisé en ce que le pigment est calciné pendant au moins 30 minutes à 850° C ou dans des conditions équivalentes.

7. Procédé selon une des revendications 1 à 6, caractérisé en ce que les sels métalliques utilisés sont les tétrachlorures.